# EUROPÄISCHE PATENTSCHRIFT

(11) **EP 0 980 201 B1**
(45) Veröffentlichungstag und Bekanntmachung des Hinweises auf die Patenterteilung: **08.05.2002**
(21) Anmeldenummer: 99114149.0
(22) Anmeldetag: 20.07.1999
(51) Int. Cl.: H05K 5/04, H04M 1/02

(54) **Türanlage, insbesondere Türsprechanlage**
Intercom apparatus
Dispositif d' interphone

(30) Priorität: 12.08.1998 DE 19836434
(43) Veröffentlichungstag der Anmeldung: 16.02.2000
(73) Patentinhaber: Ritto - Werk Loh GmbH & Co. KG, 35708 Haiger (DE)
(72) Erfinder: Achenbach, Heinz, 35236 Breidenbach (DE)
(74) Vertreter: Fleck, Hermann-Josef, Dr.-Ing.

(56) Entgegenhaltungen:
- US-A- 4 791 531
- US-A- 5 415 038

## Beschreibung

Die Erfindung betrifft eine Türanlage, insbesondere Türsprechanlage, mit einem Gehäuse mit einem Aufnahmeraum für mehrere Funktionseinheiten mit rechteckiger Außenkontur, die in einer Zeile oder Spalte nebeneinander in den Aufnahmeraum des Gehäuses mittels aufeinander abgestimmter Verbindungsund Gegenverbindungselemente einsetzbar und darin gehalten sind.

Derartige Türanlagen in sogenannter Modulbauweise sind in verschiedenen Ausgestaltungen bekannt, wie die FR-PS 21 22 912, die DE-OS 31 08 056 und die DE 40 19 837 C2 zeigen. Dabei werden bevorzugt die Funktionseinheiten nur in einer Zeile oder Spalte auseinander gereiht, um den Aufbau des Gehäuses nicht unnötig im Teile- und Montageaufwand zu verteuern. Dazu kommt, dass auch das Einsetzen und Austauschen von Funktionseinheiten mehr oder weniger schwierig ist.

Es ist Aufgabe der Erfindung, bei einer Türanlage der eingangs erwähnten Art den Gehäuseaufbau im Teile- und Montageaufwand zu vereinfachen, ohne dass dadurch das Einsetzen und Austauschen von Funktionseinheiten erschwert wird und die Möglichkeit besteht, das Gehäuse auch für mehrere Zeilen oder Spalten von Funktionseinheiten auslegen zu können.

Diese Aufgabe wird nach der Erfindung dadurch gelöst, dass das Gehäuse als im Querschnitt U-förmiger Profilabschnitt mit Befestigungsplatte und Gehäuse-Seitenwänden ausgebildet ist, der sich über die Reihe oder Spalte der Funktionseinheiten erstreckt, dass die Gehäuse-Seitenwände zum Aufnahmeraum des Profilabschnittes hin mit den Verbindungselementen versehen sind, die in Gegenverbindungselemente der Funktionseinheit einführbar sind oder diese hintergreifen, dass die Gegenverbindungselemente an allen vier Außenseiten der Funktionseinheiten angebracht sind, dass die Funktionseinheiten über eine offene Seite des Profilabschnittes in den Aufnahmeraum einsetzbar sind und dass die offenen Seiten des Profilabschnittes nach dem Einsetzen der Funktionseinheiten mittels Seitenteilen verschließbar sind.

Das Gehäuse umfaßt nur drei Teile, wovon der Profilabschnitt mit allen Elementen zum Festhalten der Funktionseinheiten und Anbringen der Seitenteile versehen ist. Für ein "Rasterfeld" von Funktionseinheiten wird der Profilabschnitt lediglich so erweitert, dass der Aufnahmeraum des Profilabschnittes für mehrere Zeilen oder Spalten von Funktionseinheiten mittels an der Befestigungsplatte angeformter Verbindungsstege unterteilt ist, und dass die Verbindungsstege den benachbarten Zeilen oder Spalten zugekehrt mit gleichen Verbindungselementen wie die Gehäuse-Seitenwände versehen sind, wobei das Einsetzen der Funktionseinheiten in gleicher Weise über eine offene Seite des Profilabschnittes erfolgt. Da die Funktionseinheiten auf allen Außenseiten mit Gegenverbindungselementen versehen sind, können sie unter Beibehaltung ihrer vertikalen Ausrichtung sowohl in den horizontal als auch in den vertikal für eine Zeile oder Spalte von Funktionseinheiten ausgerichteten Profilabschnitt eingesetzt werden.

Der Halt der Funktionseinheiten im Aufnahmeraum des Gehäuses wird dadurch noch verbessert, dass auch die Seitenteile dem Aufnahmeraum des Profilabschnittes zugekehrt mit gleichen Verbindungselementen wie die Gehäuse-Seitenwände versehen sind.

Für den mechanischen Halt der Funktionseinheiten im Aufnahmeraum gibt es verschiedene Gestaltungsmöglichkeiten für die Verbindungs- und Gegenverbindungselemente. So kann z.B. vorgesehen sein, dass die Verbindungselemente als Federelemente ausgebildet sind, die in als Nutelemente ausgebildete Gegenverbindungselemente einführbar sind, oder in äquivalenter Weise, dass die Verbindungselemente als Nutelemente ausgebildet sind, in die als Federelemente ausgebildete Gegenverbindungselemente einführbar sind.

Der Halt kann auch schon dadurch erreicht werden, dass die Verbindungselemente als Haltestege ausgebildet sind, die ein als Absatz an der Funktionseinheit ausgebildetes Gegenverbindungselement auf der der Befestigungsplatte abgekehrten Seite hintergreifen, oder in äquivalenter Weise, dass die Verbindungselemente als Absätze der Gehäuse-Seitenwände oder Verbindungsstege ausgebildet sind, die von einem als Haltesteg ausgebildeten Gegenverbindungselement auf der der Befestigungsplatte zugekehrten Seite hintergriffen sind.

Bei größerem Rasterfeld von in Zeilen und Spalten aneinander gereihten Funktionseinheiten wird die Festlegung derselben im Aufnahmeraum des Gehäuses dadurch verbessert, dass die Befestigungsplatte auf der dem Aufnahmeraum des Profilabschnittes zugekehrten Seite parallel zu den Gehäuse-Seitenwänden verlaufende Verbindungsstege aufweist, und dass die Funktionseinheiten in der der Befestigungsplatte zugekehrten Unterseite mit die Verbindungsstege aufnehmenden Aufnahmenuten versehen sind.

Um die vertikale Ausrichtung der Funktionseinheiten sowohl bei vertikal als auch bei horizontal verlaufenden Verbindungsstegen des Profilabschnittes beibehalten zu können, sieht eine Weiterbildung vor, dass die Funktionseinheiten mit senkrecht zueinander stehenden Aufnahmenuten versehen und in zwei um 90° verdrehten Stellungen mit den Verbindungsstegen des Profilabschnittes verbindbar sind.

Ist zudem vorgesehen, dass die Gehäuse-Seitenwände zur Frontseite hin eine erweiterte Aufnahme für einen Ansatz der Funktionseinheiten bilden, in die eine Dichtungsnut für ein Dichtungselement eingebracht ist, dann können die Funktionseinheiten auf einfache Weise zum Gehäuse hin abgedichtet werden.

Die Anbringung der Seitenteile am Profilabschnitt wird nach einer Ausgestaltung dadurch erleichtert, dass die Gehäuse-Seitenwände mit Schraubkanälen zur Aufnahme von Befestigungsschrauben für die Festlegung der Seitenteile am Profilabschnitt versehen sind.

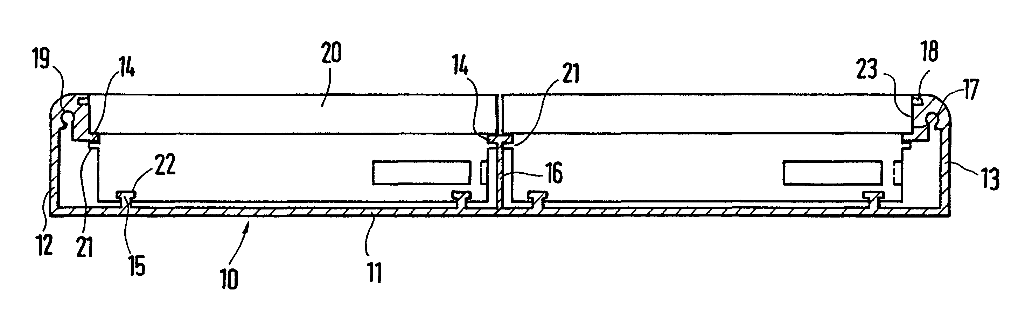

Die Erfindung wird anhand eines in der Zeichnung dargestellten Ausführungsbeispiels näher erläutert.

Die Zeichnung zeigt im Querschnitt den Profilabschnitt 10 des Gehäuses, dessen Aufnahmeraum für zwei Zeilen oder Spalten von Funktionseinheiten 20 ausgelegt ist. Der Profilabschnitt 10, der aus Kunststoff oder Metall bestehen kann, umfaßt eine Befestigungsplatte 11 und die Gehäuse-Seitenwände 12 und 13. Der Aufnahmeraum des Profilabschnittes 10 ist durch den Verbindungssteg 16 unterteilt. Die Abmessung des Profilabschnittes 10 in der Breite kann auch mehrere Zeilen oder Spalten umfassen. Dies richtet sich nach dem erforderlichen Rasterfeld. Die Länge des Profilabschnittes 10 erstreckt sich über ein ganzzahliges Vielfaches der in der Regel mit quadratischer Außenkontur ausgebildeten Funktionseinheiten.

Über eine offene Seite des Profilabschnittes 10 werden die Funktionseinheiten 20 eingeschoben und durch aufeinander abgestimmte Verbindungselemente 14 des Profilabschnittes 10 und Gegenverbindungselemente 21 der Funktionseinheiten im Aufnahmeraum des Profilabschnitts 10 gehalten, wobei bei einem Rasterfeld auch die Verbindungen zwischen den Funktionseinheiten 20 und den Verbindungsstegen 16 hergestellt werden. Die Verbindungselemente 14 können als Federelemente und die Gegenverbindungselemente 21 als Nutelemente oder umgekehrt ausgebildet sein.

Die Verbindungs- und Gegenverbindungselemente können auch nur eine Hinterschnittverbindung herstellen, mit der die Funktionseinheiten 20 so im Aufnahmeraum gehalten sind, dass sie nicht über die Frontseite aus dem Aufnahmeraum herausgenommen werden können. Dies ist in einfacher Weise mittels Ansätzen oder Absätzen und diese hintergreifende Haltestege zu erreichen.

Wie der Schnitt zeigt, kann der Halt der Funktionseinheiten 20 im Profilabschnitt 10 durch zusätzliche Verbindungsstege 15 auf der dem Aufnahmeraum des Profilabschnittes 10 zugekehrten Seite der Befestigungsplatte 11 verbessert werden. Im Ausführungsbeispiel sind pro Zeile oder Spalte, d.h. pro Funktionseinheit zwei Verbindungsstege 15 angeformt, die in Aufnahmenuten 22 im Boden der Funktionseinheiten 20 eingebracht sind. Die Funktionseinheiten 20 weisen jeweils zwei Paare von Aufnahmenuten 22 auf, die senkrecht zueinander stehen, damit sie unter Beibehaltung einer vertikalen Ausrichtung auf horizontal oder vertikal ausgerichtete Haltestege 15 des Profilabschnittes 10 aufgeschoben werden können. Der Verbindungssteg 16 ist zu beiden Zeilen oder Spalten von Funktionseinheiten 20 hin mit Verbindungselementen 14 versehen, so daß auch in diesen Bereichen die Funktionseinheiten 20 sicher im Profilabschnitt 10 gehalten sind. Die Funktionseinheiten 20 tragen ja auf allen vier Außenseiten entsprechende Gegenverbindungselemente 21 für die Verbindungselemente 14 des Verbindungssteges 16.

Ist die Funktionseinheit 20 zur Frontseite hin abgesetzt erweitert, dann bildet der Profilabschnitt 10 und die (nicht dargestellten) Seitenteile eine erweiterte Aufnahme 17 für den Ansatz 23 der Funktionseinheit 20. In die Aufnahme 17 kann eine Dichtungsnut 18 für ein Dichtungselement eingebracht werden. Die Seitenteile sind im wesentlichen wie die Gehäuse-Seitenwände 12 und 13 ausgebildet und weisen gleiche Verbindungselemente 14 auf wie die Gehäuse-Seitenwände 12 und 13, die mit durchgehenden Schraubkanälen 19 zum Anschrauben der Seitenteile versehen sind.

Um das Einsetzen der Funktionseinheiten 20 zu erleichtern, kann auch vorgesehen sein, daß die Verbindungselemente 14 und die Verbindungsstege 15 als Einzelelemente ausgebildet sind und daß die Gegenverbindungselemente 21 und Aufnahmenuten 22 mit Einführungsausnehmungen für diese Einzelelemente versehen sind. Dann können die Funktionseinheiten 20 senkrecht zu der Hauptebene des Gehäuses eingeführt und durch einen kurzen Verstellweg in der Hauptebene im Gehäuse festgelegt werden.

## Patentansprüche

1. Türanlage, insbesondere Türsprechanlage, mit einem Gehäuse mit einem Aufnahmeraum für mehrere Funktionseinheiten mit rechteckiger Außenkontur, die in einer Zeile oder Spalte nebeneinander in den Aufnahmeraum des Gehäuses mittels aufeinander abgestimmter Verbindungsund Gegenverbindungselemente einsetzbar und darin gehalten sind,
**dadurch gekennzeichnet,**
**dass** das Gehäuse als im Querschnitt U-förmiger Profilabschnitt (10) mit Befestigungsplatte (11) und Gehäuse-Seitenwänden (12, 13) ausgebildet ist, der sich über die Reihe oder Spalte der Funktionseinheiten (20) erstreckt,
**dass** die Gehäuse-Seitenwände (12, 13) zum Aufnahmeraum des Profilabschnittes (10) hin mit den Verbindungselementen (14) versehen sind, die in Gegenverbindungselemente (21) der Funktionseinheit (20) einführbar sind oder diese hintergreifen,
**dass** die Gegenverbindungselemente (21) an allen vier Außenseiten der Funktionseinheiten (20) angebracht sind,
**dass** die Funktionseinheiten (20) über eine offene Seite des Profilabschnittes (10) in den Aufnahmeraum einsetzbar sind und
**dass** die offenen Seiten des Profilabschnittes (10) nach dem Einsetzen der Funktionseinheiten (20) mittels Seitenteilen verschließbar sind.

2. Türanlage nach Anspruch 1,
**dadurch gekennzeichnet,**
**dass** auch die Seitenteile dem Aufnahmeraum des Profilabschnittes (10) zugekehrt mit gleichen Verbindungselementen (14) wie die Gehäuse-Seitenwände (12, 13) versehen sind.

3. Türanlage nach Anspruch 1 oder 2,
**dadurch gekennzeichnet,**
**dass** der Aufnahmeraum des Profilabschnittes (10) für mehrere Zeilen oder Spalten von Funktionseinheiten (20) mittels an der Befestigungsplatte (11) angeformter Verbindungsstege (16) unterteilt ist, und
**dass** die Verbindungsstege (16) den benachbarten Zeilen oder Spalten zugekehrt mit gleichen Verbindungselementen (14) wie die Gehäuse-Seitenwände (12, 13) versehen sind.

4. Türanlage nach einem der Ansprüche 1 bis 3,
**dadurch gekennzeichnet,**
**dass** die Verbindungselemente (14) als Federelemente ausgebildet sind, die in als Nutelemente ausgebildete Gegenverbindungselemente (21) einführbar sind.

5. Türanlage nach einem der Ansprüche 1 bis 3,
**dadurch gekennzeichnet,**
**dass** die Verbindungselemente als Nutelemente ausgebildet sind, in die als Federelemente ausgebildete Gegenverbindungselemente einführbar sind.

6. Türanlage nach einem der Ansprüche 1 bis 3,
**dadurch gekennzeichnet,**
**dass** die Verbindungselemente als Haltestege ausgebildet sind, die ein als Absatz an der Funktionseinheit (20) ausgebildetes Gegenverbindungselement auf der der Befestigungsplatte (11) abgekehrten Seite hintergreifen.

7. Türanlage nach einem der Ansprüche 1 bis 3,
**dadurch gekennzeichnet,**
**dass** die Verbindungselemente (14) als Absätze der Gehäuse-Seitenwände (12, 13) oder Verbindungsstege (16) ausgebildet sind, die von einem als Haltesteg ausgebildeten Gegenverbindungselement (21) auf der der Befestigungsplatte (11) zugekehrten Seite hintergriffen sind.

8. Türanlage nach einem der Ansprüche 1 bis 7,
**dadurch gekennzeichnet,**
**dass** die Befestigungsplatte (11) auf der dem Aufnahmeraum des Profilabschnittes (10) zugekehrten Seite parallel zu den Gehäuse-Seitenwänden (12, 13) verlaufende Verbindungsstege (15) aufweist, und
**dass** die Funktionseinheiten (20) in der der Befestigungsplatte (11) zugekehrten Unterseite mit die Verbindungsstege (15) aufnehmenden Aufnahmenuten (22) versehen sind.

9. Türanlage nach Anspruch 8,
**dadurch gekennzeichnet,**
**dass** die Funktionseinheiten (20) mit senkrecht zueinander stehenden Aufnahmenuten (22) versehen und in zwei um 90° verdrehten Stellungen mit den Verbindungsstegen (15) des Profilabschnittes (10) verbindbar sind.

10. Türanlage nach einem der Ansprüche 1 bis 9,
**dadurch gekennzeichnet,**
**dass** die Gehäuse-Seitenwände (12, 13) zur Frontseite hin eine erweiterte Aufnahme (17) für einen Ansatz (23) der Funktionseinheiten (20) bilden, in die eine Dichtungsnut (18) für ein Dichtungselement eingebracht ist.

11. Türanlage nach einem der Ansprüche 1 bis 10,
**dadurch gekennzeichnet,**
**dass** die Gehäuse-Seitenwände (12, 13) mit Schraubkanälen (19) zur Aufnahme von Befestigungsschrauben für die Festlegung der Seitenteile am Profilabschnitt (10) versehen sind.

12. Türanlage nach einem der Ansprüche 1 bis 11,
**dadurch gekennzeichnet,**
**dass** die Verbindungselemente (14) und die Verbindungsstege (16) als beabstandete Einzelelemente ausgebildet sind, und
**dass** die Gegenverbindungselemente (21) und die Aufnahmenuten (22) mit Einführungsausnehmungen versehen sind.

## Claims

1. Door system, in particular door intercom system, having a housing with an accommodating chamber for a plurality of functional units which are of rectangular outer contour and, in a line or column one beside the other, can be inserted into the accommodating chamber of the housing, and retained therein, by means of coordinated connecting and mating connecting elements, **characterized in that** the housing is designed as a cross-sectionally U-shaped profile section (10) which has a fastening plate (11) and housing side walls (12, 13) and extends over the row or column of functional units (20), **in that** the housing side walls (12, 13), in the direction of the accommodating chamber of the profile section (10), are provided with the connecting elements (14), which can be introduced into mating connecting elements (21) of the functional unit (20) or engage behind the same, **in that** the mating connecting elements (21) are provided on all four outer sides of the functional units (20), **in that** the functional units (20) can be inserted into the accommodating chamber via an open side of the profile section (10), and **in that** the open sides of the profile section (10) can be closed by means of side parts following the insertion of the functional units (20).

2. Door system according to Claim 1, **characterized in that** it is also the case that the side parts, directed towards the accommodating chamber of the profile section (10), are provided with the same connecting elements (14) as the housing side walls (12, 13).

3. Door system according to Claim 1 or 2, **characterized in that** the accommodating chamber of the profile section (10), for a plurality of lines or columns of functional units (20), is subdivided by means of connecting crosspieces (16) integrally formed on the fastening plate (11), and **in that** the connecting crosspieces (16), directed towards the adjacent lines or columns, are provided with the same connecting elements (14) as the housing side walls (12, 13).

4. Door system according to one of Claims 1 to 3, **characterized in that** the connecting elements (14) are designed as tongue elements which can be introduced into mating connecting elements (21) designed as groove elements.

5. Door system according to one of Claims 1 to 3, **characterized in that** the connecting elements are designed as groove elements into which it is possible to introduce mating connecting elements designed as tongue elements.

6. Door system according to one of Claims 1 to 3, **characterized in that** the connecting elements are designed as retaining crosspieces which engage behind a mating connecting element, designed as a shoulder on the functional unit (20), on the side directed away from the fastening plate (11).

7. Door system according to one of Claims 1 to 3, **characterized in that** the connecting elements (14) are designed as shoulders of the housing side walls (12, 13) or connecting crosspieces (16) which have engaging behind them a mating connecting element (21), designed as a retaining crosspiece, on the side directed towards the fastening plate (11).

8. Door system according to one of Claims 1 to 7, **characterized in that** the fastening plate (11), on the side directed towards the accommodating chamber of the profile section (10), has connecting crosspieces (15) running parallel to the housing side walls (12, 13), and **in that** the functional units (20), in the underside, which is directed towards the fastening plate (11), are provided with accommodating grooves (22) which accommodate the connecting crosspieces (15).

9. Door system according to Claim 8, **characterized in that** the functional units (20) are provided with accommodating grooves (22) located perpendicularly to one another and, in two positions rotated through 90°, can be connected to the connecting crosspieces (15) of the profile section (10).

10. Door system according to one of Claims 1 to 9, **characterized in that** the housing side walls (12, 13), in the direction of the front side, form an extended mount (17) for an extension (23) of the functional units (20), in which a sealing groove (18) for the sealing element is made.

11. Door system according to one of Claims 1 to 10, **characterized in that** the housing side walls (12, 13) are provided with screw-connection channels (19) for accommodating fastening screws for securing the side parts on the profile section (10).

12. Door system according to one of Claims 1 to 11, **characterized in that** the connecting elements (14) and the connecting crosspieces (16) are designed as spaced-apart individual elements, and **in that** the mating connecting elements (21) and the accommodating grooves (22) are provided with introduction recesses.

## Revendications

1. Dispositif d'interphone, en particulier dispositif de portier téléphonique, avec un boîtier avec un espace de réception pour plusieurs unités fonctionnelles avec un contour extérieur rectangulaire, qui peuvent être montées en une ligne ou une colonne l'une à côté de l'autre dans l'espace de réception du boîtier au moyen d'éléments d'assemblage et d'éléments d'assemblage conjugués accordés les uns aux autres et qui sont maintenues dans celui-ci, **caractérisé en ce que** le boîtier est constitué par une portion de profilé (10) ayant une section transversale en forme de U avec une plaque de fixation (11) et des parois latérales (12, 13) du boîtier, qui s'étend sur la rangée ou la colonne des unités fonctionnelles (20), **en ce que** les parois latérales (12, 13) du boîtier sont pourvues, vers l'espace de réception de la portion de profilé (10), des éléments d'assemblage (14) qui peuvent être introduits dans des éléments d'assemblage conjugués (21) de l'unité fonctionnelle (20) ou qui accrochent ceux-ci par l'arrière, **en ce que** les éléments d'assemblage conjugués (21) sont placés sur toutes les quatre faces extérieures des unités fonctionnelles (20), **en ce que** les unités fonctionnelles (20) peuvent être montées dans l'espace de réception par un côté ouvert de la portion de profilé (10), et **en ce que** les côtés ouverts de la portion de profilé (10) peuvent être fermés au moyen de pièces latérales après le montage des unités fonctionnelles (20).

2. Dispositif d'interphone suivant la revendication 1, **caractérisé en ce que** les pièces latérales sont également pourvues, vers l'espace de réception de la portion de profilé (10), des mêmes éléments d'assemblage (14) que les parois latérales (12, 13) du boîtier.

3. Dispositif d'interphone suivant la revendication 1 ou 2, **caractérisé en ce que** l'espace de réception de la portion de profilé (10) est subdivisé, pour plusieurs lignes ou colonnes d'unités fonctionnelles (20), au moyen de nervures d'assemblage (16) façonnées sur la plaque de fixation (11), et **en ce que** les nervures d'assemblage (16) sont pourvues, vers les lignes ou colonnes voisines, des mêmes éléments d'assemblage (14) que les parois latérales (12, 13) du boîtier.

4. Dispositif d'interphone suivant l'une quelconque des revendications 1 à 3, **caractérisé en ce que** les éléments d'assemblage (14) sont constitués par des éléments élastiques, qui peuvent être introduits dans des éléments d'assemblage conjugués (21) constitués par des éléments de rainure.

5. Dispositif d'interphone suivant l'une quelconque des revendications 1 à 3, **caractérisé en ce que** les éléments d'assemblage sont constitués par des éléments de rainure, dans lesquels des éléments d'assemblage conjugués constitués par des éléments élastiques peuvent être introduits.

6. Dispositif d'interphone suivant l'une quelconque des revendications 1 à 3, **caractérisé en ce que** les éléments d'assemblage sont constitués par des nervures de maintien, qui accrochent par l'arrière un élément d'assemblage conjugué constitué par un épaulement sur l'unité fonctionnelle (20) sur le côté situé à l'opposé de la plaque de fixation (11).

7. Dispositif d'interphone suivant l'une quelconque des revendications 1 à 3, **caractérisé en ce que** les éléments d'assemblage (14) sont constitués par des épaulements des parois latérales (12, 13) du boîtier ou des nervures d'assemblage (16), qui sont accrochés par l'arrière par un élément d'assemblage conjugué (21) constitué par une nervure de maintien sur le côté tourné vers la plaque de fixation (11).

8. Dispositif d'interphone suivant l'une quelconque des revendications 1 à 7, **caractérisé en ce que** la plaque de fixation (11) présente, sur le côté tourné vers l'espace de réception de la portion de profilé (10), des nervures d'assemblage (15) orientées parallèlement aux parois latérales (12, 13) du boîtier, et **en ce que** les unités fonctionnelles (20) sont pourvues, dans le côté inférieur tourné vers la plaque de fixation (11), de rainures de réception (22) recevant les nervures d'assemblage (15).

9. Dispositif d'interphone suivant la revendication 8, **caractérisé en ce que** les unités fonctionnelles (20) sont pourvues de rainures de réception (22) disposées perpendiculairement les unes aux autres et peuvent être assemblées dans deux positions tournées de 90° avec les nervures d'assemblage (15) de la portion de profilé (10).

10. Dispositif d'interphone suivant l'une quelconque des revendications 1 à 9, **caractérisé en ce que** les parois latérales (12, 13) du boîtier forment, en direction de la face frontale, un logement élargi (17) pour un appui (23) des unités fonctionnelles (20), dans lequel est ménagée une rainure d'étanchéité (18) pour un élément d'étanchéité.

11. Dispositif d'interphone suivant l'une quelconque des revendications 1 à 10, **caractérisé en ce que** les parois latérales (12, 13) du boîtier sont pourvues de canaux à vis (19) destinés à recevoir des vis de fixation pour la fixation des pièces latérales à la portion de profilé (10).

12. Dispositif d'interphone suivant l'une quelconque des revendications 1 à 11, **caractérisé en ce que** les éléments d'assemblage (14) et les nervures d'assemblage (16) sont constitués par des éléments individuels espacés et **en ce que** les éléments d'assemblage conjugués (21) et les rainures de réception (22) sont pourvus d'évidements d'introduction.
